# EUROPÄISCHE PATENTSCHRIFT

(11) **EP 0 429 074 B1**
(45) Veröffentlichungstag und Bekanntmachung des Hinweises auf die Patenterteilung: **19.05.1993**
(21) Anmeldenummer: 90122238.0
(22) Anmeldetag: 21.11.1990
(51) Int. Cl.: B23C 3/02, B23C 5/22, B41N 3/04

(54) **Fräskopf zur Feinbearbeitung von Werkstücken, insbesondere Tiefdruckzylindern**
Milling head for smoothing workpieces, specially for copper plate printing cylinders
Tête de fraisage à finir des pièces, specialement pour des cylindres à impression en creux

(30) Priorität: 24.11.1989 CH 4226/89
(43) Veröffentlichungstag der Anmeldung: 29.05.1991
(73) Patentinhaber: MDC Max Dätwyler Bleienbach AG, CH-3368 Bleienbach (CH)
(72) Erfinder: Dätwyler, Max, CH-3368 Bleienbach (CH)
(74) Vertreter: Patentanwälte Schaad, Balass, Menzl & Partner AG

(56) Entgegenhaltungen:
- FR-A- 1 573 595
- US-A- 2 726 579
- US-A- 4 626 150

## Beschreibung

Die vorliegende Erfindung betrifft einen Fräskopf zur Feinbearbeitung der Oberfläche von Werkstücken, insbesondere Tiefdruckzylindern, gemäss Oberbegriff des Anspruches 1. Ein derartiger Stand der Technik ist bekannt.

Zum Feinbearbeiten (Schlichten) der Mantelflächen von Tiefdruckzylindern ist es bekannt, Fräswerkzeuge zu verwenden, die einen mit grosser Geschwindigkeit (etwa 3800 Umdrehungen/min.) umlaufend angetriebenen Grundkörper aufweisen, in dem ein (oder mehrere) ausserhalb der Drehachse liegendes Messer befestigt ist. Dieses Messer steht stirnseitig über den Grundkörper vor und die Messerschneide erstreckt sich etwa in radialer Richtung. Das Fräswerkzeug wird in Achsrichtung des zu bearbeitenden, langsam drehenden Tiefdruckzylinders vorgeschoben. Um die erforderliche hohe Oberflächengüte zu erreichen, ist es erforderlich, die Schneide des Messers äusserst genau, das heisst auf etwa ein Mikron genau, zu schleifen, was sehr schwierig ist.

Aus diesem Grund ist man dazu übergegangen, das Messer in einem Messerhalter zu halten und letzteren mittels zweier in radialer Richtung beabstandeten Schrauben am Grundkörper zu befestigen. Durch verschieden starkes Anziehen dieser Schrauben kann die Neigung des Messerhalters und damit der Messerschneide bezüglich einer rechtwinklig zur Drehachse des Grundkörpers verlaufenden Ebene etwas verdrängt werden. Durch eine geringfügige Schrägstellung von einigen Mikron gelingt es, die gewünsche Oberflächengüte auch dann zu erreichen, wenn die Schneide nicht mit der sonst erforderlichen Genauigkeit geschliffen ist. Das genaue Einstellen der wie erwähnt sehr kleinen Neigung der Schneide durch unterschiedlich starkes Anziehen der Schrauben ist jedoch äusserst mühsam und kaum mit der gewünschten Genauigkeit möglich.

Der vorliegenden Erfindung liegt nun die Aufgabe zugrunde, einen Fräskopf der eingangs genannten Art zu schaffen, der auf einfache Weise ein genaues Einstellen der Neigung der Messerschneide bezüglich einer zur Drehachse rechtwinkligen Ebene ermöglicht.

Diese Aufgabe wird erfindungsgemäss durch die Merkmale des kennzeichnenden Teils des Anspruches 1 gelöst.

Eine genaue Neigungsverstellung des Messers und damit der Messerschneide ist nun ohne grössere Schwierigkeiten durch Drehen der Einstellscheibe möglich.

Bevorzugte Weiterausgestaltungen des erfindungsgemässen Fräskopfes sind in den abhängigen Ansprüchen umschrieben.

Im folgenden wird anhand der Zeichnung ein Ausführungsbeispiel des Erfindungsgegenstandes näher beschrieben. Es zeigen rein schematisch:
- Fig. 1: in perspektivischer Darstellung und vereinfacht eine Maschine zum Feinbearbeiten von Tiefdruckzylindern,
- Fig. 2: eine detaillierte Seitenansicht der Maschine gemäss Fig. 1 in Richtung des Pfeiles A,
- Fig. 3: in gegenüber den Fig. 1 und 2 vergrössertem Massstab in Draufsicht einen Teil des Fräskopfes mit dem ein Messer tragenden Messerhalter,
- Fig. 4: einen Schnitt durch eine Hälfte eines Fräskopfes entlang der Linie IV-IV in Fig. 3,
- Fig. 5 und 6: in Draufsicht bzw. im Schnitt entlang der Linie VI-VI eine erste Ausführungsform einer Einstellscheibe,
- Fig. 7 und 8: in Draufsicht bzw. im Schnitt entlang der Linie VIII-VIII eine zweite Ausführungsform einer Einstellscheibe,
- Fig. 9: in einer der Fig. 4 entsprechenden Darstellung den Teil des Fräskopfes mit dem Messer,
- Fig. 10: eine Ansicht des Tiefdruckzylinders mit Fräskopf in Richtung des Pfeiles B in Fig. 1, und
- Fig. 11 und 12: in stark vergrössertem Massstab einen Bereich der Mantelfläche des Tiefdruckzylinders nach der Feinbearbeitung.

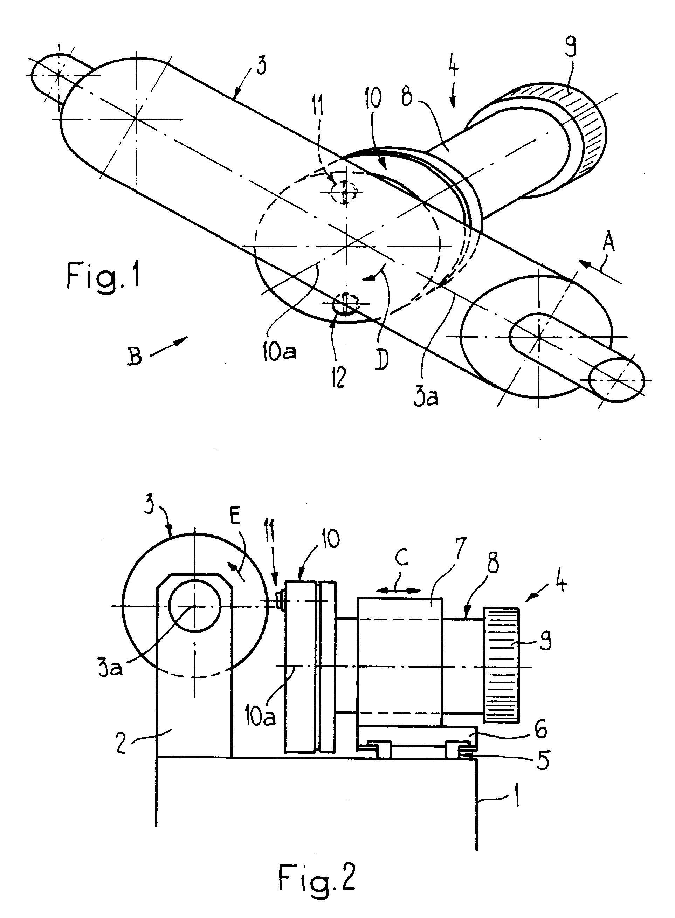

Die in den Fig. 1 und 2 nur ganz schematisch dargestellte Beabeitungsmaschine weist ein Untergestell 1 und zwei Lager 2 zur Lagerung des zu bearbeitenden Tiefdruckzylinders 3 auf. Von den beiden Lagern 2 ist in Fig. 2 nur das eine Lager erkennbar. Der Tiefdruckzylinder 3 ist in den beiden Lagern 2 mit in horizontaler Richtung verlaufender Längsachse 3a drehbar gelagert. Auf dem Untergestell 1 ist eine Fräseinheit 4 abgestützt, welche einen durch eine Längsführung 5 geführten Schlitten 6 aufweist. Die Längsführung 5 verläuft rechtwinklig zur Zeichenebene. Auf dem Schlitten 6 ist ein Querschlitten 7 angeordnet, der in Richtung des Pfeiles C hin- und herverschiebbar ist und einen Antriebs- und Lagerungsteil 8 trägt, zu dem ein Antriebsmotor 9 gehört. Der Antriebsmotor 9 treibt eine nicht dargestellte Antriebsspindel an, mit der ein Fräskopf 10 fest verbunden ist. Dieser Fräskopf 10 wird um seine Drehachse 10a in Richtung des Pfeiles D (Fig. 1) durch den Motor 9 umlaufend angetrieben, und zwar mit einer Drehzahl von etwa 6000 Umdrehungen/min.

Der Fräskopf 10 weist ein Fräswerkzeug 11 auf, das in einem Abstand von der Drehachse 10a angeordnet ist. Dem Fräswerkzeug 11 bezüglich der Drehachse 10a diametral gegenüberliegend ist ein Gegengewicht 12 (Fig. 1) vorhanden.

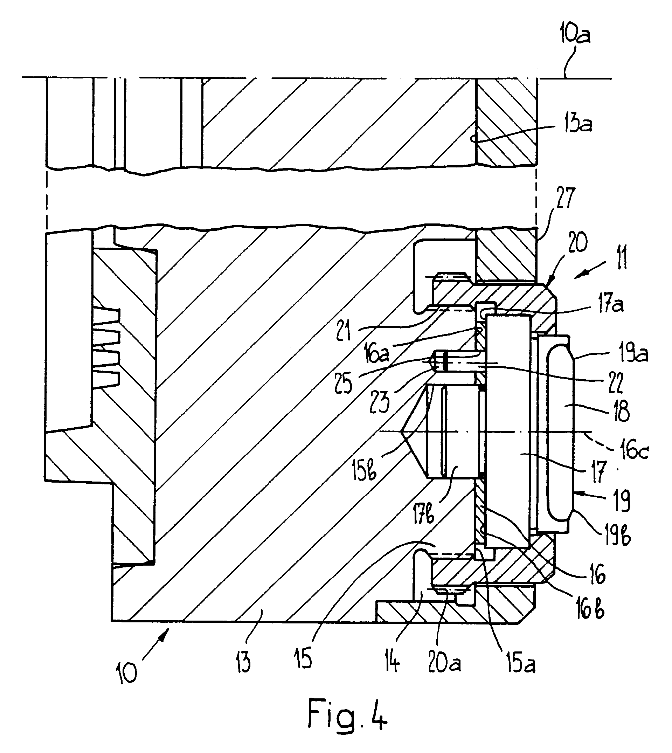

Im folgenden wird nun anhand der Fig. 3 bis 8 der Aufbau des Fräskopfes 10 und insbesondere des Fräswerkzeuges 11 beschrieben.

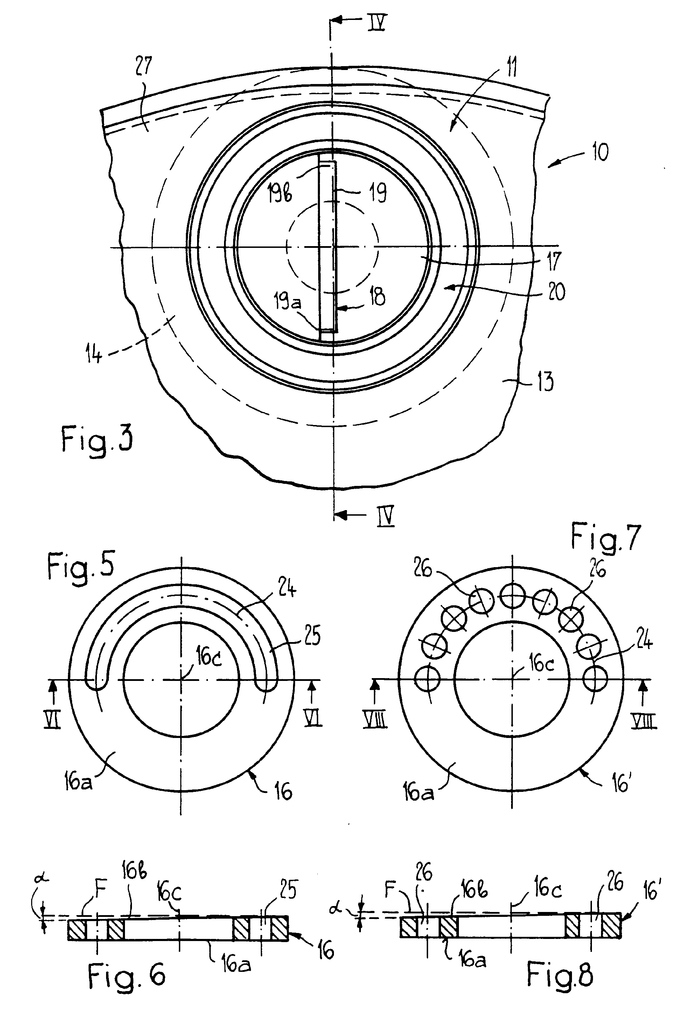

Der Fräskopf 10 weist einen Grundkörper 13 auf, der auf nicht näher dargestellte Weise mit der Antriebsspindel verbunden ist. In diesen Grundkörper 13 ist eine gegen dessen Stirnseite 13a offene, ringförmige Ausnehmung 14 eingearbeitet, welche einen zylindrischen Abstützteil 15 umgibt. Letzterer weist eine Stützfläche 15a auf, die in einer zur Drehachse 10a des Fräskopfes 10 rechtwinkligen Ebene liegt. Auf diesem Abstützteil 15 liegt eine Einstellscheibe 16 auf, welche in den Fig. 5 und 6 bzw. 7 und 8 näher dargestellt ist. Diese Einstellscheibe 16 weist zwei Stirnflächen 16a und 16b auf, von denen die Stirnfläche 16a rechtwinklig zur Mittelachse 16c der Einstellscheibe 16 verläuft. Die andere Stirnfläche 16b ist gegenüber einer rechtwinklig zu dieser Mittelachse 16c verlaufenden Ebene F geneigt und zwar um den Winkelα . Dieser Neigungswinkel ist sehr klein. Anders ausgedrückt liegt der Unterschied zwischen der grössten und der kleinsten Dicke der Einstellscheibe 16 in der Grössenordnung von Hundertstelsmillimetern. Die Einstellscheibe 16 liegt nun mit ihrer Stützfläche 16a auf der Stützfläche 15a des Abstützteiles 15 auf. Auf der anderen Stirnseite 16b der Einstellscheibe 16 liegt die Grundfläche 17a eines Messerhalters 17 an. Letzterer ist mit einem zapfenartigen Zentrierteil 17b versehen, der die Einstellscheibe 16 durchsetzt und in eine Bohrung 15b im Abstützteil 15 eingreift. In diesem Messerhalter 17 ist ein Messer 18 (Diamant) gehalten, dessen Schneide 19 im wesentlichen in radialer Richtung verläuft. Das der Drehachse 10a des Fräskopfes 10 näherliegende Ende der Schneide 19 ist mit 19a bezeichnet während das andere Ende mit 19b bezeichnet ist. Obwohl eine etwa radiale Ausrichtung der Schneide 19 besondere Vorteile hinsichtlich Erzielung einer hohen Oberflächengüte bei der Bearbeitung bietet, ist es durchaus möglich, das Messer 18 so anzuordnen, dass die Schneide 19 gegenüber der radialen Richtung etwas schräggestellt ist.

Der Messerhalter 17 und die Einstellscheibe 16 werden mittels einer Ueberwurfmutter 20, die den Messerhalter 17 seitlich übergreift, und die mittels eines Gewindes 21 auf den Abstützteil 15 aufgeschraubt ist, gegen diesen Abstützteil 15 gedrückt und damit festgehalten. Die Ueberwurfmutter 20 ist auf ihrer Aussenseite mit einer sich entlang ihres Umfanges erstreckenden Zahnung 20a versehen, die zum Eingriff mit einem Werkzeug zum Lösen und Anziehen der Ueberwurfmutter 20 vorgesehen ist. Der Messerhalter 17 trägt einen von seiner Grundfläche 17a abstehenden Positionierstift 22, der sich durch die Einstellscheibe 16 hindurch erstreckt und in eine Bohrung 23 im Abstützteil 15 eingreift. Auf diese Weise erfolgt ein Positionieren des Messerhalters 17 und somit auch des Messers 18 und der Schneide 19. Wie die Figuren 5 und 6 bzw. 7 und 8 zeigen, sind verschiedene Ausgestaltungen der Einstellscheibe 16 möglich, um dem Positionierstift 22 ein Hindurchtreten durch die Einstellscheibe 16 zu erlauben.

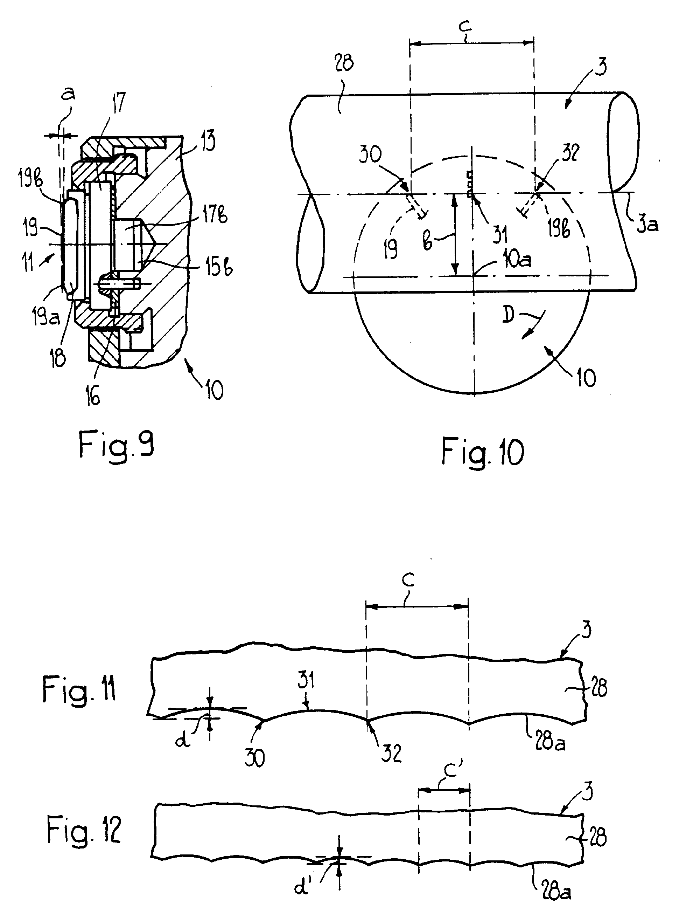

Bei der in den Figuren 5 und 6 gezeigten Variante ist die Einstellscheibe 16 mit einer sich entlang eines zur Mittelachse 16c konzentrischen Kreisbogens 24 erstreckenden Durchtrittsöffnung 25 versehen. Letztere erstreckt sich praktisch über einen Winkel von 180°. Bei der anderen Ausführungsform gemäss den Figuren 7 und 8 sind Durchtrittslöcher 26 vorhanden, die entlang des zur Mittelachse 16c konzentrischen Kreisbogens 24 verteilt angeordnet sind. Es ist ohne weiteres ersichtlich, dass bei der Ausführungsform gemäss den Figuren 5 und 6 die drehbare Einstellscheibe 16 gegenüber dem in seiner Lage nicht veränderbaren Messerhalter 17 kontinuierlich verdreht werden kann. Demgegenüber kann bei der Variante gemäss den Figuren 7 und 8 die Einstellscheibe 16 bezüglich des Messerhalters 17 nur ganz bestimmte Drehlagen einnehmen, welche durch die Durchtrittslöcher 26 festgelegt sind, durch welche sich der Positionierstift 22 hindurcherstreckt.

Auf seiner Stirnseite 13a trägt der Grundkörper 13 eine Abdeckung 27.

Infolge der Ausbildung der Einstellscheibe 16 mit zwei gegeneinander geneigten Stirnflächen 16a, 16b ist der Messerhalter 17 gegenüber der Stützfläche 15a des Abstützteils 15, die ja rechtwinklig zur Drehachse 10a des Fräskopfes 10 steht, etwas geneigt. Dies bedeutet, dass auch die Messerschneide 19 gegenüber einer rechtwinklig zu dieser Drehachse 10a verlaufenden Ebene leicht geneigt ist. Durch Verdrehen der Einstellscheibe 16 um ihre Mittelachse 16c, die parallel zur Drehachse 10a des Fräskopfes 10 ist, kann nun das Mass der Neigung der Schneide 19 verstellt werden. Hierzu ist es erforderlich, die Ueberwurfmutter 20 zu lösen. Hat die Einstellscheibe 16 die in den Figuren 5 und 6 gezeigte Ausbildung, so lässt sich die Einstellscheibe 16 kontinuierlich verdrehen, was eine stufenlose Neigungsverstellung ermöglicht. Demgegenüber ist bei einer Einstellscheibe, wie sie in den Figuren 7 und 8 gezeigt ist, nur ein schrittweises Verdrehen und somit nur eine stufenweise Aenderung der Neigung der Schneide 19 möglich.

Anhand der Figuren 9 bis 12 soll nun erläutert werden, wozu eine Neigungsverstellung der Schneide 19 dient und was mit einer solchen Schrägstellung dieser Schneide 19 erreicht werden kann.

Die erwünschte Genauigkeit der Mantelfläche 28 des Tiefdruckzylinders 3, das heisst absolut gerade Mantellinien, ist nur sehr schwer erreichbar und zwar infolge unvermeidlicher Ungenauigkeiten, z.B. ungenauer Rundlauf des Zylinders 3 und ungenaue Geradführung des Schlittens 6 durch die Längsführungen 5. Diese Ungenauigkeiten können nun dadurch etwas gemildert werden, dass die Schneide 19 des Messers 18 wie in Fig. 9 gezeigt gegenüber einer rechtwinklig zur Drehachse 10a des Fräskopfes 10 verlaufenden Ebene schräggestellt wird. Da diese Fig. 9 der Fig. 4 entspricht, sind nicht mehr alle Bauteile mit ihren Bezugszeichen bezeichnet. Wie Fig. 9 zeigt, ist der Messerhalter 17 und damit die Messerschneide 19 derart schräggestellt, dass das der Drehachse 10a des Fräskopfes 10 näherliegende Ende 19a der Schneide 19 um einen kleinen Betrag a mehr vorsteht als das gegenüberliegende Schneidenende 19b. Dieses Mass a beträgt wenige Mikron, vorzugsweise etwa 2 bis 3 Mikron. Fig. 10 zeigt nun die Anordnung des Fräskopfes 10 bezüglich des Tiefdruckzylinders 3, der in Richtung des Pfeiles E (Fig. 2) mit sehr geringer Drehzahl angetrieben wird. Die Achse 10a des Fräskopfes 10 liegt dabei um den Betrag b unterhalb der Zylinderlängsachse 3a. Während des Drehens des Fräskopfes 10 in Richtung des Pfeiles D um die Achse 10a kommt zuerst das Ende 19b der Messerschneide 19 an der in der Fig. 10 mit 30 bezeichneten Stelle (Einschnitt) auf die Zylindermantelfläche zur Einwirkung. Beim Weiterdrehen kommen weitere Bereiche der Schneide 19 zur Wirkung, was infolge der erwähnten Schrägstellung dieser Schneide auch bedeutet, dass eine stärkere Spanabhebung erfolgt. An der in der Fig. 10 mit 31 bezeichneten Stelle ist die Wirkungstiefe am grössten und nimmt anschliessend wieder ab. An der in Fig. 10 mit 32 bezeichneten Stelle (Ausschnitt) gelangt die Schneide 19 mit ihrem Ende 19b ausser Einwirkung mit der Mantelfläche 28 des Zylinders 3. Dieser Vorgang wiederholt sich bei gleichzeitigem Vorschieben des Fräskopfes 10 in Richtung der Zylinderlängsachse 3a. Durch die Stellen 30 und 32 wird die Breite c der Fräsbahn bestimmt, welche beispielsweise etwa 150mm beträgt.

In der Fig. 11 ist nun in stark vergrössertem Massstab ein Bereich der Zylindermantelfläche 28 gezeigt. Aus dieser Fig. 11 geht die Form einer Mantellinie 28a nach der Bearbeitung hervor. Die mit 30, 31 und 32 bezeichneten Punkte entsprechen den mit der gleichen Bezugsziffer bezeichneten Stellen in der Fig. 10. Die Mantellinie 28a setzt sich aus einzelnen Kreisbogenstücken mit einer der Fräsbahnbreite c entsprechenden Breite zusammen. Die Höhe der Kreisbogen, das heisst der Abstand d zwischen den Stellen 30, 32 und 31 beträgt einige Mikron, z.B. etwa 2 bis 3 Mikron. Diese geringfügige Abweichung von der idealen geraden Mantellinie bei der angegebenen Fräsbahnbreite c ist für die Praxis akzeptabel, da sich so an den Stellen 30, 32, an denen benachbarte Kreisbogenstücke aneinanderstossen, keine allzu ausgeprägte Spitzen bilden.

Wird die Fräsbahnbreite c' durch Vergrössern des Abstandes b (Fig. 10) gegenüber der Fräsbahnbreite c halbiert, das heisst von ca. 150mm auf etwa 75mm herabgesetzt, so verkleinert sich auch die Höhe der Kreisbogen auf etwa die Hälfte, das heisst d' beträgt nur noch etwa 1 bis 1,5 Mikron, wie das in Fig. 12 gezeigt ist.

Wie bereits erwähnt kann durch Verdrehen der Einstellscheibe 16 der Neigungswinkel der Messerschneide 19 verstellt werden, um bei den verschiedenen Anwendungsfällen eine Anpassung an die Gegebenheiten vornehmen zu können.

Wird eine zweite Einstellscheibe 16 mit gegeneinander geneigten Stirnflächen 16a, 16b vorgesehen, die an der ersten Einstellscheibe 16 anliegt, ist durch Drehung der einen Einstellscheibe 16 relativ zur anderen Einstellscheibe 16 eine noch feinere Einstellung der Neigung des Messerhalters 17 und damit der Schneide 19 möglich. Es versteht sich, dass zusätzlich zu der Einstellscheibe 16 eine Unterlagsscheibe oder mehrere Unterlagsscheiben herkömmlicher Art mit zueinander parallelen Stirnflächen vorgesehen werden können, auf der bzw. denen die Einstellscheibe 16 aufliegt. Solche Unterlagsscheiben haben keinen Einfluss auf die beschriebene Neigungsverstellung.

Der vorstehend anhand der Figuren beschriebene Fräskopf kann auch zur Bearbeitung anderer Werkstücke als Tiefdruckzylinder dienen, so z.B. zur Bearbeitung von ebenen Oberfläche von Werkstücken aus Metall oder Kunststoff. Hiezu kann der beschriebene Fräskopf in herkömmlichen Fräsmaschinen eingesetzt werden.

## Patentansprüche

1. Fräskopf zur Feinbearbeitung der Oberfläche von Werkstücken, mit einem mit einer Antriebsspindel verbindbaren, um eine Drehachse (10a) umlaufend antreibbaren Grundkörper (13), an dem gegenüber dieser Drehachse versetzt ein Messerhalter (17) befestigt ist, in dem ein über eine Stirnseite des Grundkörpers vorstehendes Messer (18) mit einer sich quer zu dessen Umlaufrichtung erstreckenden Schneide (18) gehalten ist, deren Neigung bezüglich einer zur Drehachse rechtwinklig stehenden Ebene mittels einer Verstellanordnung verstellbar ist, dadurch gekennzeichnet, dass die Verstellanordnung wenigstens eine zwischen dem Messerhalter (17) und einer am Grundkörper (13) vorgesehenen Stützfläche (15a) verdrehbar angeordnete Einstellscheibe (16) aufweist, deren beiden Stirnflächen (16a, 16b) gegeneinander geneigt sind.

2. Fräskopf nach Anspruch 1, dadurch gekennzeichnet, dass die Stützfläche (15a) in einer zur Drehachse (10a) rechtwinkligen Ebene liegt und die eine Stirnfläche (16a) der Einstellscheibe (16) zu deren Mittelachse (16c) rechtwinklig steht und die andere Stirnfläche (16b) gegenüber dieser Mittelachse (16c) geneigt ist.

3. Fräskopf nach Anspruch 1 oder 2, dadurch gekennzeichnet, dass die Schneide (19) des Messers (18) sich im wesentlichen in radialer Richtung erstreckt.

4. Fräskopf nach einem der Ansprüche 1 bis 3, dadurch gekennzeichnet, dass die Neigung (α) der Schneide (19) des Messers (18) derart eingestellt ist, dass das der Drehachse (10a) näherliegende Ende (19a) der Messerschneide (19) weiter vorsteht als das entgegengesetzte Ende (19b) der Messerschneide (19), vorzugsweise um etwa 2 - 3 Mikron.

5. Fräskopf nach einem der Ansprüche 1 bis 4, gekennzeichnet durch Arretiermittel (20) zum Arretieren der Einstellscheibe (16) in verschiedenen Drehlagen.

6. Fräskopf nach Anspruch 5, gekennzeichnet durch eine am Messerhalter (17) angreifende, auf den Grundkörper (13) aufschraubbare Ueberwurfmutter (20); welche über den Messerhalter (17) die Einstellscheibe (16) gegen den Grundkörper (13) drückt.

7. Fräskopf nach einem der Ansprüche 1 bis 6, dadurch gekennzeichnet, dass der Messerhalter (17) mit einer Grundfläche (17a) mit der einen Stirnfläche (16b) der Einstellscheibe (16) in Berührung steht und die Einstellscheibe (16), mit der andern Stirnfläche (16a) auf der Stützfläche (15a) des Grundkörpers (13) aufliegt.

8. Fräskopf nach einem der Ansprüche 1 bis 7, gekennzeichnet durch einen Positionierstift (22) zum Positionieren des Messerhalters (17), der letzteren mit dem Grundkörper (13) lösbar verbindet und der sich durch die Einstellscheibe (16) hindurch erstreckt.

9. Fräskopf nach Anspruch 8, dadurch gekennzeichnet, dass die Einstellscheibe (16) für den Durchtritt des Positionierstiftes (22) mit einer Anzahl von entlang eines konzentrischen Kreisbogens (24) verteilt angeordneten Durchtrittsbohrungen (26) oder einer sich entlang eines konzentrischen Kreisbogens (24) erstreckenden Durchtrittsöffnung (25) versehen ist.

10. Fräskopf nach Anspruch 8 oder 9, dadurch gekennzeichnet, dass der Positionierstift (22) am Messerhalter (17) befestigt ist und in eine Bohrung (23) im Grundkörper (13) eingreift.

## Claims

1. Milling head for the fine machining of the surface of workpieces, having a basic body (13) which can be connected to a drive spindle and can be driven so as to rotate about a rotational axis (10a) and to which a cutter holder (17) is fixed in an offset position relative to this rotational axis, in which cutter holder a cutter (18) is held which projects beyond an end face of the basic body and has a cutting edge (19) extending transversely to its direction of rotation, the inclination of which cutting edge, relative to a plane disposed at right angles to the rotational axis, can be adjusted by means of an adjusting arrangement, characterised in that the adjusting arrangement has at least one setting disc (16) rotatably arranged between the cutter holder (17) and a supporting surface (15a) provided on the basic body (13), the two end faces (16a, 16b) of which setting disc (16) are inclined toward one another.

2. Milling head according to Claim 1, characterised in that the supporting surface (15a) lies in a plane at right angles to the rotational axis (10a), and one end face (16a) of the setting disc (16) is at right angles to its centre axis (16c) and the other end face (16b) is inclined relative to this centre axis (16c).

3. Milling head according to Claim 1 or 2, characterised in that the cutting edge (19) of the cutter (18) extends essentially in radial direction.

4. Milling head according to one of Claims 1 to 3, characterised in that the inclination (α) of the cutting edge (19) of the cutter (18) is set in such as way that the end (19a) of the cutting edge (19) of the cutter nearer to the rotational axis (10a) projects further than the opposite end (19b) of the cutting edge (19) of the cutter, preferably by about 2 - 3 microns.

5. Milling head according to one of Claims 1 to 4, characterised by locking means (20) for locking the setting disc (16) in various rotational positions.

6. Milling head according to Claim 5, characterised by a cap nut (20) which acts on the cutter holder (17), can be screwed onto the basic body (13) and presses the setting disc (16) against the basic body (13) via the cutter holder (17).

7. Milling head according to one of Claims 1 to 6, characterised in that the cutter holder (17), with a base surface (17a), is in contact with one end face (16b) of the setting disc (16), and the setting disc (16) rests with the other end face (16a) on the supporting surface (15a) of the basic body (13).

8. Milling head according to one of Claims 1 to 7, characterised by a positioning pin (22) for positioning the cutter holder (17), which positioning pin (22) detachably connects the latter to the basic body (13) and extends through the setting disc (16).

9. Milling head according to Claim 8, characterised in that the setting disc (16), for the passage of the positioning pin (22), is provided with a number of passage bores (26) arranged in a distributed manner along a concentric circular arc (24) or with a passage opening (25) extending along a concentric circular arc (24).

10. Milling head according to Claim 8 or 9, characterised in that the positioning pin (22) is fixed to the cutter holder (17) and engages into a bore (23) in the basic body (13).

## Revendications

1. Tête de fraisage pour la finition de la surface de pièces, comportant un corps de base (13), à relier à une broche d'entraînement, entraîné en rotation autour d'un axe de rotation (10a), sur lequel est fixé, décalé par rapport à cet axe de rotation, un porte-couteau (17) dans lequel un couteau (18), dépassant d'un côté frontal du corps de base, est maintenu avec une lame (18) s'étendant transversalement à son sens de rotation, lame dont l'inclinaison est réglable, au moyen d'un dispositif de réglage, par rapport à un plan perpendiculaire à l'axe de rotation, caractérisée en ce que le dispositif de réglage comporte au moins un disque de réglage (16), monté tournant entre le porte-couteau (17) et une surface d'appui (15a), prévue sur le corps de base (13), dont les deux surfaces frontales (16a, 16b) sont inclinées l'une vers l'autre.

2. Tête de fraisage selon la revendication 1, caractérisée en ce que la surface d'appui (15a) se situe dans un plan perpendiculaire à l'axe de rotation (10a) et une surface frontale (16a) du disque de réglage (16) est perpendiculaire à son axe médian (16c) et l'autre surface frontale (16c) est inclinée par rapport à cet axe médian (16c).

3. Tête de fraisage selon la revendication 1 ou 2, caractérisée en ce que la lame (19) du couteau (18) s'étend à peu près radialement.

4. Tête de fraisage selon l'une des revendications 1 à 3, caractérisée en ce que l'inclinaison (α) de la lame (19) du couteau (18) est réglée de manière que l'extrémité (19a), la plus proche de l'axe de rotation (10a), de la lame de couteau (19), dépasse plus que l'extrémité opposée (19b) de la lame de couteau (19), de préférence de 2 à 3 microns.

5. Tête de fraisage selon l'une des revendications 1 à 4, caractérisée par des moyens de blocage (20) pour bloquer le disque de réglage (16) en différentes positions de rotation.

6. Tête de fraisage selon la revendication 5, caractérisée par un écrou (20) agissant sur le porte-couteau (17), à visser sur le corps de base (13), lequel écrou presse, par l'intermédiaire du porte-couteau (17), le disque de réglage (16), contre le corps de base (13).

7. Tête de fraisage selon l'une des revendications 1 à 6, caractérisée en ce que le porte-couteau (17) est en contact, par une surface de base (17a), avec une surface frontale (16b) du disque de réglage (16) et le disque de réglage (16) repose, par l'autre surface frontale (16a), sur la surface d'appui (15a) du corps de base (13).

8. Tête de fraisage selon l'une des revendications 1 à 7, caractérisée par un doigt de positionnement (22) pour positionner le porte-couteau (17), qui relie, de manière amovible, ce dernier avec le corps de base (13) et qui traverse le disque de réglage (16).

9. Tête de fraisage selon la revendication 8, caractérisée en ce que le disque de réglage (16) est pourvu, pour le passage du doigt de positionnement (22), d'un certain nombre de trous de passage (26), répartis le long d'un arc de cercle (24) concentrique, ou d'un trou de passage (25) s'étendant le long d'un arc de cercle (24) concentrique.

10. Tête de fraisage selon la revendication 8 ou 9, caractérisée en ce que le doigt de positionnement (22) est fixé sur le porte-couteau (17) et s'engage dans un trou (23) du corps de base (13).
